# EUROPEAN PATENT APPLICATION

(11) **EP 4 645 914 A1**
(43) Date of publication of application: **05.11.2025**
(21) Application number: 23917270.3
(22) Date of filing: 13.12.2023
(51) Int. Cl.: H04W 4/029, H04L 67/51

(54) **COMMUNICATION METHOD AND APPARATUS**

(30) Priority: 20.01.2023 CN 202310105515
(71) Applicant: Huawei Technologies Co., Ltd., Shenzhen, Guangdong 518129 (CN)
(72) Inventor: WANG, Pengfei, Shenzhen, Guangdong 518129 (CN); WANG, Yufang, Shenzhen, Guangdong 518129 (CN)
(74) Representative: Pfenning, Meinig & Partner mbB
(86) International application number: PCT/CN2023/138299
(87) International publication number: WO 2024/152803

(57) **Abstract**

A communication method and apparatus are provided, to optimize a service discovery response. After receiving a service discovery request that is from a network function client, a first network function repository network element determines that the service discovery request meets a first condition, and determines to optimize a service discovery response; and further, the first network function repository network element sends an optimized service discovery response to the network function client. In this way, the service discovery response is optimized, reducing signaling overheads of the service discovery response and a waste of network resources, and saving storage resources of the NF client.

## Description

### CROSS-REFERENCE TO RELATED APPLICATIONS

This application claims priority to Chinese Patent Application No. 202310105515.7, filed with the China National Intellectual Property Administration on January 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

An architecture of a 5^{th} generation (5^{th} generation, 5G) system is defined as a service based architecture (service based architecture, SBA). Functions of an SBA system include a series of NF sets that provide services to other authorized network functions (network functions, NFs). An NF registers its service information with an NF repository function network element (NF repository function, NRF). Another NF may send a service discovery request to the NRF, to obtain information about a service instance that supports a specified type of service.

The NF registers, with the NRF through a service registration procedure, information about services supported by the NF. A 3rd generation partnership project (3rd generation partnership project, 3GPP) protocol defines a structure of the information that the NF registers with the NRF as an NF profile (NF Profile). In a service discovery procedure, the NRF performs matching based on a search criterion in an NF service discovery request from a client, and returns, to the client by using a service discovery response, an NF profile of an NF that matches the criterion. However, currently, the returned NF profile includes a large amount of information. As a result, signaling overheads of the service discovery response are high.

### SUMMARY

This application provides a communication method and apparatus, to optimize a service discovery response.

According to a first aspect, this application provides a communication method. The method may be applied to a first network function repository network element, or to a processor, chip, functional module, or the like in a first network function repository network element. An example is used for description, in which the method is applied to a first network function repository network element. The method may include: After receiving a service discovery request that is from a network function client, a first network function repository network element determines that the service discovery request meets a first condition, and determines to optimize a service discovery response; and further, the first network function repository network element sends an optimized service discovery response to the network function client. The service discovery request is used to request network function service instance information.

According to the foregoing method, the service discovery response is optimized, reducing signaling overheads of the service discovery response and a waste of network resources, and saving storage resources of the NF client.

In a possible design, the first network function repository network element and the network function client belong to different public land mobile networks. In this way, signaling overheads of an inter-public land mobile network service discovery response can be reduced, a waste of network resources can be reduced, and storage resources of the NF client can be saved.

In a possible design, the first condition may include: The service discovery request is from a first public land mobile network, and the service discovery response corresponding to the service discovery request that is from the first public land mobile network needs to be optimized, where the first network function repository network element belongs to a second public land mobile network, and the second public land mobile network is different from the first public land mobile network. In this way, the first network function repository network element can accurately determine, based on that the service discovery request is from the first public land mobile network, that the service discovery response is to be optimized.

In a possible design, the first condition may include: The service discovery request includes first indication information, where the first indication information indicates that the service discovery response needs to be optimized. In this way, the first network function repository network element can accurately determine, based on the first indication information, that the service discovery response is to be optimized.

In a possible design, a method for that the first network function repository network element receives the service discovery request that is from the network function client may be as follows: The first network function repository network element may receive, from a second network function repository network element, the service discovery request that is from the network function client, where the first indication information is added to the service discovery request by the second network function repository network element, and the first network function repository network element and the second network function repository network element belong to a same public land mobile network, or the first network function repository network element and the second network function repository network element belong to different public land mobile networks. In this way, subsequently, the first network function repository network element can accurately determine, based on the first indication information, that the service discovery response is to be optimized.

In a possible design, the service discovery response includes second indication information, where the second indication information indicates that the service discovery response is optimized. In this way, the network function client can perform buffering for the optimized service discovery response based on the second indication information.

According to a second aspect, this application provides a communication method. The method may be applied to a network function client, or to a processor, chip, functional module, or the like in a network function client. An example is used for description, in which the method is applied to a network function client. The method may include: A network function client sends a service discovery request, and receives an optimized service discovery response that is from a first network function repository network element, where the service discovery request is used to request network function service instance information, and the first network function repository network element and the network function client belong to different public land mobile networks.

According to the foregoing method, the service discovery response is optimized, reducing signaling overheads of the inter-public land mobile network service discovery response and a waste of network resources, and saving storage resources of the NF client.

In a possible design, the service discovery response includes second indication information, where the second indication information indicates that the service discovery response is optimized. In this way, the network function client can perform buffering for the optimized service discovery response based on the second indication information.

In a possible design, the network function client determines, based on the second indication information, that the service discovery response is optimized. In this way, the network function client can perform buffering for the optimized service discovery response based on the second indication information.

According to a third aspect, this application provides a communication system. The communication system may include a first network function repository network element, a second network function repository network element, a network function client, and the like. After receiving a service discovery request that is from the network function client, the second network function repository network element sends the service discovery request to the first network function repository network element; the first network function repository network element determines that the service discovery request meets a first condition, and determines to optimize a service discovery response; and further, the first network function repository network element sends an optimized service discovery response to the network function client. The service discovery request is used to request network function service instance information.

According to the foregoing communication system, the service discovery response is optimized, reducing signaling overheads of the service discovery response and a waste of network resources, and saving storage resources of the NF client.

In a possible design, the first network function repository network element and the network function client belong to different public land mobile networks. In this way, signaling overheads of an inter-public land mobile network service discovery response can be reduced, a waste of network resources can be reduced, and storage resources of the NF client can be saved.

In a possible design, the first condition may include: The service discovery request is from a first public land mobile network, and the service discovery response corresponding to the service discovery request that is from the first public land mobile network needs to be optimized, where the first network function repository network element belongs to a second public land mobile network, and the second public land mobile network is different from the first public land mobile network. In this way, the first network function repository network element can accurately determine, based on that the service discovery request is from the first public land mobile network, that the service discovery response is to be optimized.

In a possible design, the first condition may include: The service discovery request includes first indication information, where the first indication information indicates that the service discovery response needs to be optimized. In this way, the first network function repository network element can accurately determine, based on the first indication information, that the service discovery response is to be optimized.

In a possible design, after receiving the service discovery request that is from the network function client, the second network function repository network element adds the first indication information to the service discovery request, where the first network function repository network element and the second network function repository network element belong to a same public land mobile network, or the first network function repository network element and the second network function repository network element belong to different public land mobile networks. In this way, subsequently, the first network function repository network element can accurately determine, based on the first indication information, that the service discovery response is to be optimized.

In a possible design, the service discovery response includes second indication information, where the second indication information indicates that the service discovery response is optimized. In this way, the network function client can perform buffering for the optimized service discovery response based on the second indication information.

According to a fourth aspect, this application further provides a communication apparatus. The communication apparatus may be a first network function repository network element. The communication apparatus has units that implement functions in the first aspect or the possible design examples of the first aspect. The functions may be implemented by hardware, or may be implemented by executing corresponding software by hardware. The hardware or software includes one or more modules corresponding to the foregoing functions.

In a possible design, a structure of the communication apparatus includes a transceiver unit and a processing unit. These units may perform corresponding functions in the first aspect or the possible design examples of the first aspect. For details, refer to detailed descriptions in the method examples. Details are not described herein.

In a possible design, a structure of the communication apparatus includes a transceiver and a processor, and optionally, further includes a memory. The transceiver is configured to receive and send messages, and is configured to communicate and interact with another device in a system. The processor is configured to support the communication apparatus to perform corresponding functions in the first aspect or the possible design examples of the first aspect. The memory is coupled to the processor, and stores program instructions and data that are necessary for the communication apparatus.

According to a fifth aspect, this application further provides a communication apparatus. The communication apparatus may be a network function client. The communication apparatus has units that implement functions in the second aspect or the possible design examples of the second aspect. The functions may be implemented by hardware, or may be implemented by executing corresponding software by hardware. The hardware or software includes one or more modules corresponding to the foregoing functions.

In a possible design, a structure of the communication apparatus includes a transceiver unit and a processing unit. These units may perform corresponding functions in the second aspect or the possible design examples of the second aspect. For details, refer to detailed descriptions in the method examples. Details are not described herein.

In a possible design, a structure of the communication apparatus includes a transceiver and a processor, and optionally, further includes a memory. The transceiver is configured to receive and send messages, and is configured to communicate and interact with another device in a system. The processor is configured to support the communication apparatus to perform corresponding functions in the second aspect or the possible design examples of the second aspect. The memory is coupled to the processor, and stores program instructions and data that are necessary for the communication apparatus.

According to a sixth aspect, an embodiment of this application provides a computer-readable storage medium. The computer-readable storage medium stores program instructions. When the program instructions are run on a computer, the computer is enabled to perform the method according to any one of the first aspect or the possible designs of the first aspect or the method according to any one of the second aspect or the possible designs of the second aspect in embodiments of this application. For example, the computer-readable storage medium may be any available medium that can be accessed by a computer. Examples of the computer-readable medium may include but are not limited to: a non-transitory computer-readable medium, a random access memory (random access memory, RAM), a read-only memory (read-only memory, ROM), an electrically erasable programmable read-only memory (electrically EPROM, EEPROM), a CD-ROM or another compact disc storage, a magnetic disk storage medium or another magnetic storage device, or any other medium that can carry or store expected program code in a form of instructions or a data structure and that can be accessed by a computer.

According to a seventh aspect, an embodiment of this application provides a computer program product, including computer program code or instructions. When the computer program code or the instructions are run on a computer, the method according to any one of the first aspect or the possible designs of the first aspect or the method according to any one of the second aspect or the possible designs of the second aspect is performed.

According to an eighth aspect, this application further provides a chip, including a processor. The processor is coupled to a memory, and is configured to read and execute program instructions stored in the memory, so that the chip implements the method according to any one of the first aspect or the possible designs of the first aspect or the method according to any one of the second aspect or the possible designs of the second aspect.

For each of the third aspect to the eighth aspect and technical effects that can be achieved by the aspect, refer to the foregoing descriptions of the technical effects that can be achieved by the first aspect or the possible solutions in the first aspect or by the second aspect or the possible solutions in the second aspect. Details are not described herein again.

### BRIEF DESCRIPTION OF DRAWINGS

FIG. 1 is a diagram of an architecture of a communication system according to this application;
FIG. 2 is a flowchart of a communication method according to this application;
FIG. 3 is a flowchart of an example of a communication method according to this application;
FIG. 4 is a flowchart of an example of another communication method according to this application;
FIG. 5 is a flowchart of an example of another communication method according to this application;
FIG. 6 is a flowchart of an example of another communication method according to this application;
FIG. 7 is a diagram of a structure of a communication apparatus according to this application; and
FIG. 8 is a diagram of a structure of a communication apparatus according to this application.

### DESCRIPTION OF EMBODIMENTS

The following further describes this application in detail with reference to the accompanying drawings.

Embodiments of this application provide a communication method and apparatus, to optimize a service discovery response. The method and the apparatus described in this application are based on a same technical concept. Because the method and the apparatus have similar problem-resolving principles, mutual reference may be made to implementations of the apparatus and the method. Repeated parts are not described again.

In descriptions of this application, words such as "first" and "second" are used for distinguishing purposes only, and shall not be understood as indicating or implying relative importance, or indicating or implying an order.

In the descriptions of this application, "at least one (type)" means one or more (types), and "a plurality of (types)" means two or more (types). "at least one of the following items" or a similar expression thereof indicates any combination of these items, including a single item or any combination of a plurality of items. For example, at least one of a, b, or c may indicate a, b, c, a and b, a and c, b and c, or a, b, and c, where a, b, and c may be singular or plural.

In the descriptions of this application, "and/or" describes an association between associated objects, and indicates that three relationships may exist. For example, A and/or B may indicate the following cases: Only A exists, both A and B exist, and only B exists, where A and B may be singular or plural. In addition, "/" indicates "or". For example, a/b indicates a or b.

To describe technical solutions in embodiments of this application more clearly, the following describes in detail, with reference to the accompanying drawings, the communication method and apparatus provided in embodiments of this application.

The communication method provided in this application may be applicable to a 5G SBA system. Functions of the SBA system include a series of NF sets that provide services to other authorized NFs. An NF registers its service information with an NRF. Another NF may send a service discovery request to the NRF, to obtain information about a service instance that supports a specified type of service. Further, the communication method provided in this application may be applicable to a system or scenario in which a network function client (referred to as an NF client for short hereinafter) sends a service discovery request to an NRF, to obtain matching service instance information. In the scenario, the NF client that initiates the service discovery request and an NRF that finally returns a service discovery response may belong to a same public land mobile network (public land mobile network, PLMN), or may belong to different PLMNs.

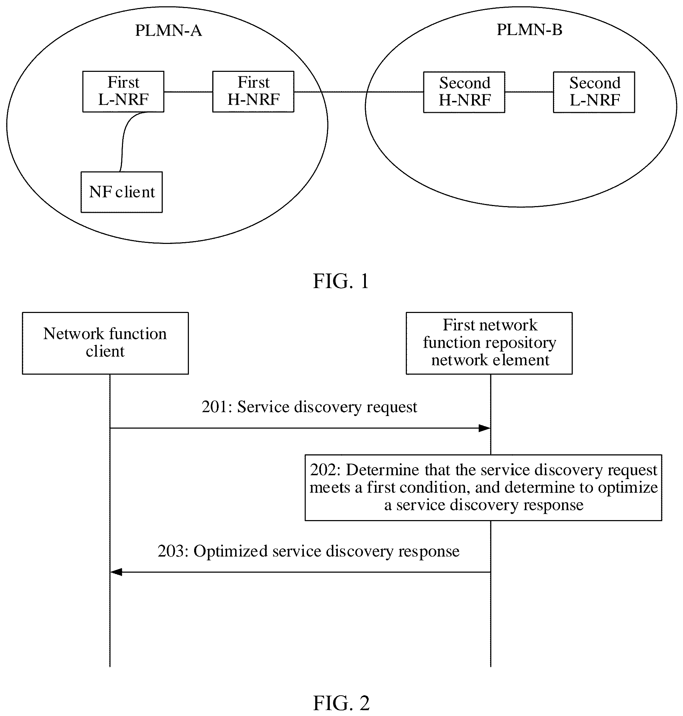

An architecture of a communication system to which the communication method provided in this application is applicable may include at least one NF client and a plurality of NRFs. For example, FIG. 1 is a diagram of an architecture of a possible communication system to which this application is applicable. The communication system may include an NF client, a first higher layer NRF (higher layer NRF, H-NRF), a first lower layer NRF (lower layer NRF, L-NRF), a second H-NRF, and a second L-NRF. The NF client, the first H-NRF, and the first L-NRF belong to a same PLMN, for example, a PLMN-A shown in FIG. 1. The second H-NRF and the second L-NRF belong to a same PLMN, for example, a PLMN-B shown in FIG. 1. The PLMN-A and the PLMN-B are different.

In the communication system, the NF client initiates a service discovery request, and finally, it is the second L-NRF that returns a service discovery response for the service discovery request. In other words, FIG. 1 shows that an NF client that initiates a service discovery and an NRF that returns a service discovery response belong to different PLMNs.

It should be noted that the architecture of the communication system shown in FIG. 1 is merely an example, and may alternatively include more or fewer devices, or the devices are connected in another manner. This is not limited in this application.

It should be understood that in addition to the scenario shown in FIG. 1 in which an NF client that initiates a service discovery and an NRF that returns a service discovery response belong to different PLMNs, this application is also applicable to a scenario in which an NF client that initiates a service discovery and an NRF that returns a service discovery response belong to a same PLMN. Details are not described herein again.

Currently, an NF client may register, with an NRF through a service registration procedure, information about services supported by the NF client. A 3GPP protocol defines a structure of the information that the NF client registers with the NRF as an NF profile. NF attribute information included in the NF profile may be classified into three categories basically.
(1) Information that needs to be used as a matching criterion during service discovery, for example, a tracking area identity (tracking area identity, TAI) range supported by a session management function (session management function, SMF) network element, and subscribers' subscription permanent identifier range (subscription permanent identifier range, SUPI range) list information stored by a unified data management (unified data management, UDM) network element. Fields such as a TAI list (taiList) and supiRanges are of an array type, with no limit on specifications. In a commercial network, supiRanges in one NF profile includes more than 10,000 records.
(2) Information that needs to be used during service invoking, for example, internet protocol (internet protocol, IP) endpoint information, priority information, and weight information that are of an NF.
(3) Service access control information.

In a service discovery procedure, the NRF performs matching based on a search criterion in a service discovery request, and returns, to the NF client, an NF profile of an NF that matches the criterion. The returned NF profile does not include service access control information (3) of the NF, but basically includes all information in (1) and (2), unless it is specifically described in the 3GPP protocol that a particular attribute does not need to be returned or only partial information of a particular attribute needs to be returned.

After obtaining NF instance information from the NRF, the NF client saves the NF instance information into its buffer. In addition, the NF client may subscribe to the NF instance information from the NRF. After the subscription succeeds, if the NRF senses a change in the NF instance information, the NRF pushes a notification to the NF client proactively, to notify the client of latest NF instance information.

Because the fields of the array type in the category-(1) attribute information in the NF profile may include an infinite quantity of records, and a service discovery response includes all record entries of the fields, packets of the two types are of a large size, which even exceeds 2 M in some commercially deployed networks. The large packets of the two types cause network congestion and network element overloading.

The network packets carrying all the information in the NF profile are sometimes unnecessary, especially in an inter-PLMN scenario. For example, inter-PLMN service invoking is triggered by a roaming subscriber. However, because there are a small quantity of inter-PLMN subscribers, only a small quantity of fields in the category-(1) attribute information are used after the NF client buffers the NF profile. Therefore, in the inter-PLMN scenario, the network packets carrying all the information in the NF profile cause a waste of not only network resources but also storage resources of the NF client. Certainly, in an intra-PLMN scenario, the network packets carrying all the information in the NF profile also cause a waste of not only network resources but also storage resources of the NF client.

In view of this, an embodiment of this application provides a communication method, to optimize a service discovery response and reduce information carried in the service discovery response, reducing a waste of network resources and saving storage resources of an NF client.

It should be noted that in the following embodiments, an operation being performed by an XX network element or device may be understood as that the operation is performed by the XX network element or device, or may be understood as that the operation is performed by a processor, chip, functional module, or the like in the XX network element or device. For example, an operation being performed by a first network function repository network element may be understood as that the operation is performed by the first network function repository network element, or may be understood as that the operation is performed by a processor, chip, or functional module in the first network function repository network element. This is not limited in this application.

Based on the foregoing descriptions, FIG. 2 shows a communication method according to an embodiment of this application. A specific procedure of the method may include the following steps.

Step 201: A network function client sends a service discovery request, where the service discovery request is used to request network function service instance information. Correspondingly, a first network function repository network element receives the service discovery request that is from the network function client.

In a possible scenario, the first network function repository network element and the network function client belong to different public land mobile networks. In descriptions of this application, the scenario in which the first network function repository network element and the network function client belong to different public land mobile networks is used as an example for description. It should be understood that the method in this application is also applicable to a scenario in which the first network function repository network element and the network function client belong to a same public land mobile network. Details are not described.

In an optional implementation, the network function client may send the service discovery request to a network function repository network element that is directly connected to the network function client, and the network function repository network element that is directly connected to the network function client sends the service discovery request to the first network function repository network element through one or more other network function repository network elements.

For example, a first L-NRF is directly connected to the network function client, and the first network function repository network element is a second L-NRF. A transmission path of the service discovery request may be as follows: the network function client - the first L-NRF - a first H-NRF - a second H-NRF - the first L-NRF. Optionally, the network function client, the first L-NRF, and the first H-NRF belong to a PLMN-A, and the second H-NRF and the second L-NRF belong to a PLMN-B. The PLMN-A and the PLMN-B are different.

For example, the service discovery request may include a search criterion that is used to match the network function service instance information. For example, the search criterion may be a target NF type (target-nf-type), a service name (service-names), a target PLMN list (target-plmn-list), an SUPI, or the like. Optionally, an example in which a target PLMN list (target-plmn-list) included in the service discovery request is the PLMN-B is used for description in this application.

Step 202: The first network function repository network element determines that the service discovery request meets a first condition, and determines to optimize a service discovery response.

In an optional implementation, the first condition may include the following two manners.

Manner a1: The first condition may be as follows: The service discovery request is from a first public land mobile network (that is, the PLMN-A), and the service discovery response corresponding to the service discovery request that is from the first public land mobile network needs to be optimized. The first network function repository network element belongs to a second public land mobile network (that is, the PLMN-B), and the second public land mobile network is different from the first public land mobile network.

The service discovery request may include an identifier of a source PLMN, so that it can be determined, based on the identifier of the source PLMN in the service discovery request, that the service discovery request is from the first public land mobile network.

In the manner a1, after the network function client sends the service discovery request to the network function repository network element that is directly connected to the network function client (the first L-NRF is used for description), the network function repository network element that is directly connected to the network function client, which is the first L-NRF, may forward the service discovery request to the first H-NRF in the PLMN-A. Then, the first H-NRF forwards the service discovery request to the second H-NRF. The second H-NRF forwards the service discovery request to the first network function repository network element (that is, the second L-NRF).

After receiving the service discovery request, the first network function repository network element determines, based on the identifier of the source PLMN in the service discovery request, that the service discovery request is from the first public land mobile network. In addition, the first network function repository network element recognizes that a configured rule is that the service discovery response corresponding to the service discovery request that is from the first public land mobile network needs to be optimized. Therefore, the first network function repository network element determines to optimize the service discovery response.

Manner a2: The first condition may be as follows: The service discovery request includes first indication information. The first indication information indicates that the service discovery response needs to be optimized.

For example, the first indication information may be indication information in a hypertext transfer protocol header (hypertext transfer protocol header, HTTP header) in the service discovery request. For example, an optimization indicator in a predefined header (custom header) is true (simplifyInd=true).

In the manner a2, after receiving the service discovery request that is from the network function client, a second network function repository network element may add the first indication information to the service discovery request, and then send, to the first network function repository network element, the service discovery request to which the first indication information is added.

Specifically, in the manner a2, there may be the following two cases for the first network function repository network element and the second network function repository network element.

Case b1: The first network function repository network element and the second network function repository network element belong to a same public land mobile network (for example, the PLMN-B).

In the case b1, the second network function repository network element may be the second H-NRF mentioned above. In this case, after receiving the service discovery request, the second H-NRF may determine, based on the identifier of the source PLMN in the service discovery request, that the service discovery request is from the first public land mobile network (that is, the PLMN-A). In addition, the second H-NRF recognizes that a configured rule is that the service discovery response corresponding to the service discovery request that is from the first public land mobile network needs to be optimized. Based on this, the second H-NRF adds the first indication information to the service discovery request.

In other words, after the network function client sends the service discovery request to the network function repository network element that is directly connected to the network function client (the first L-NRF is used for description), the first L-NRF may forward the service discovery request to the first H-NRF in the PLMN-A. Then, the first H-NRF forwards the service discovery request to the second H-NRF. If determining that the corresponding service discovery response needs to be optimized, the second H-NRF adds the first indication information to the service discovery request. Finally, the second H-NRF forwards, to the first network function repository network element (that is, the second L-NRF), the service discovery request to which the first indication information is added.

Case b2: The first network function repository network element and the second network function repository network element belong to different public land mobile networks. For example, the first network function repository network element belongs to the PLMN-B, and the second network function repository network element belongs to the PLMN-A.

In the case b2, the second network function repository network element may be the network function repository network element that is directly connected to the network function client, which is the first L-NRF, or may be the first H-NRF. In this case, after receiving the service discovery request, the second network function repository network element may determine, based on an identifier of a destination PLMN in the service discovery request, that the service discovery request is to be sent to the PLMN-B. In addition, the second network function repository network element recognizes that a configured rule is that the service discovery response corresponding to the service discovery request that is to be sent to the PLMN-B needs to be optimized. Based on this, the second network function repository network element adds the first indication information to the service discovery request.

Correspondingly, when the second network function repository network element is the first H-NRF, after the network function client sends the service discovery request to the first L-NRF, the first L-NRF may forward the service discovery request to the first H-NRF in the PLMN-A. Then, if determining that the corresponding service discovery response needs to be optimized, the first H-NRF adds the first indication information to the service discovery request, and sends, to the second H-NRF, the service discovery request to which the first indication information is added. The second H-NRF forwards, to the first network function repository network element (that is, the second L-NRF), the service discovery request to which the first indication information is added.

When the second network function repository network element is the first L-NRF, after the network function client sends the service discovery request to the first L-NRF, the first L-NRF adds the first indication information to the service discovery request if determining that the corresponding service discovery response needs to be optimized. Then, the first L-NRF may send, to the first H-NRF in the PLMN-A, the service discovery request to which the first indication information is added. Then, the first H-NRF forwards, to the second H-NRF, the service discovery request to which the first indication information is added. The second H-NRF forwards, to the first network function repository network element (that is, the second L-NRF), the service discovery request to which the first indication information is added.

Step 203: The first network function repository network element sends an optimized service discovery response to the network function client.

Based on step 202, after determining to optimize the service discovery response, the first network function repository network element may reduce information carried in the service discovery response, for example, reduce information included in NF profiles, to simplify the service discovery response.

Optionally, the optimized service discovery response may include only information that matches the search criterion in the service discovery response, and may not include information that is not related to the search criterion. In this way, when this case is compared with a case in the conventional technology in which all information is carried, the service discovery response includes a small amount of information.

For example, the first network function repository network element finds, through matching, NF profiles that meet the criterion. In the returned service discovery response, "supiRanges" nested in the NF profiles includes only a value that matches an supi carried in the search criterion, and an information element "plmnlist" includes only a value that matches a PLMN ID in "target-plmn-list" carried in the search criterion.

After determining the optimized service discovery response, the first network function repository network element sends the service discovery response to the second H-NRF. The second H-NRF forwards the service discovery response to the first H-NRF. The first H-NRF forwards the service discovery response to the first L-NRF. The first L-NRF forwards the service discovery response to the network function client.

Correspondingly, after receiving the service discovery response, the network function client may update only the information in the service discovery response when buffering a result. Processing of saved information is not limited. For example, when the network function client saves "supiRanges" in information about an NF instance (NF Instance) in the NF profiles, if another supiRange value of the NF instance already exists in a buffer, the network function client only needs to save a new value in "supiRanges" in the service discovery response, with no need to delete the another "supiRanges" value that already exists in the buffer. A principle for processing another information element is also the same. Therefore, details are not described.

Optionally, the first network function repository network element may add second indication information to the service discovery response. The second indication information may indicate that the service discovery response is optimized.

For example, the second indication information may be indication information in a search result (SearchResult) in the service discovery response. For example, an optimization response indicator, which is a flag, in SearchResult is true (simplifyRsp=true).

After receiving the service discovery response, the network function client may determine, based on the second indication information, that the service discovery response is optimized, and therefore perform the buffering operation.

In an optional implementation, a validity period field (validityPeriod) in a service discovery response may be set to different values for different scenarios. For example, a value of a validity period field (validityPeriod) in an inter-PLMN service discovery response may be set to be less than a value of a validity period field (validityPeriod) in an intra-PLMN service discovery response, so that buffered records in a network function client that does not subscribe to corresponding instance information are refreshed quickly in an inter-PLMN scenario.

According to the foregoing method, the service discovery response is optimized, to reduce the information carried in the service discovery response. In this way, signaling overheads of the service discovery response and a waste of network resources can be reduced, and storage resources of the NF client can be saved.

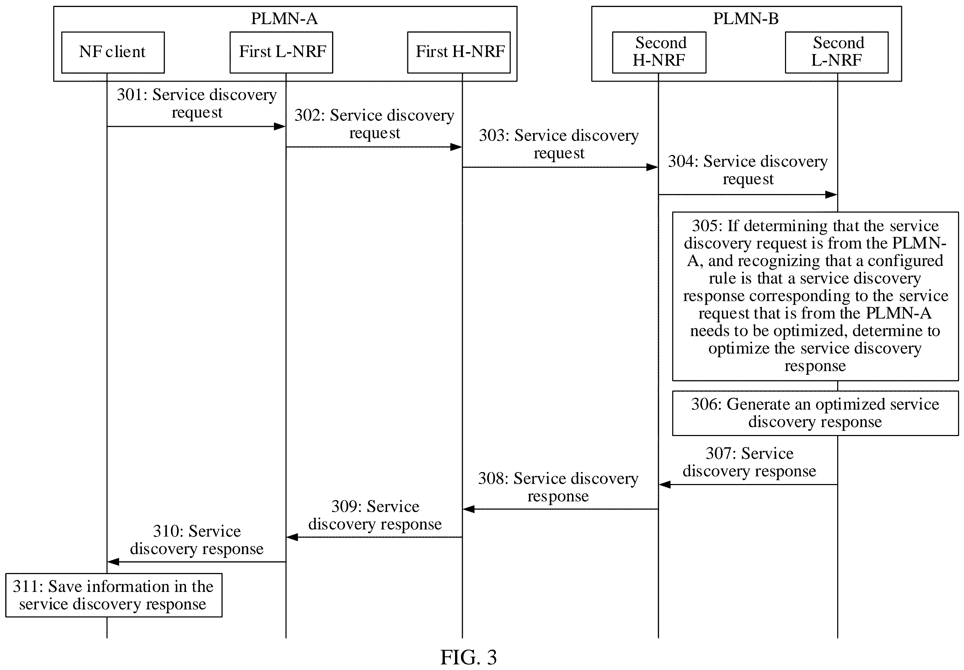

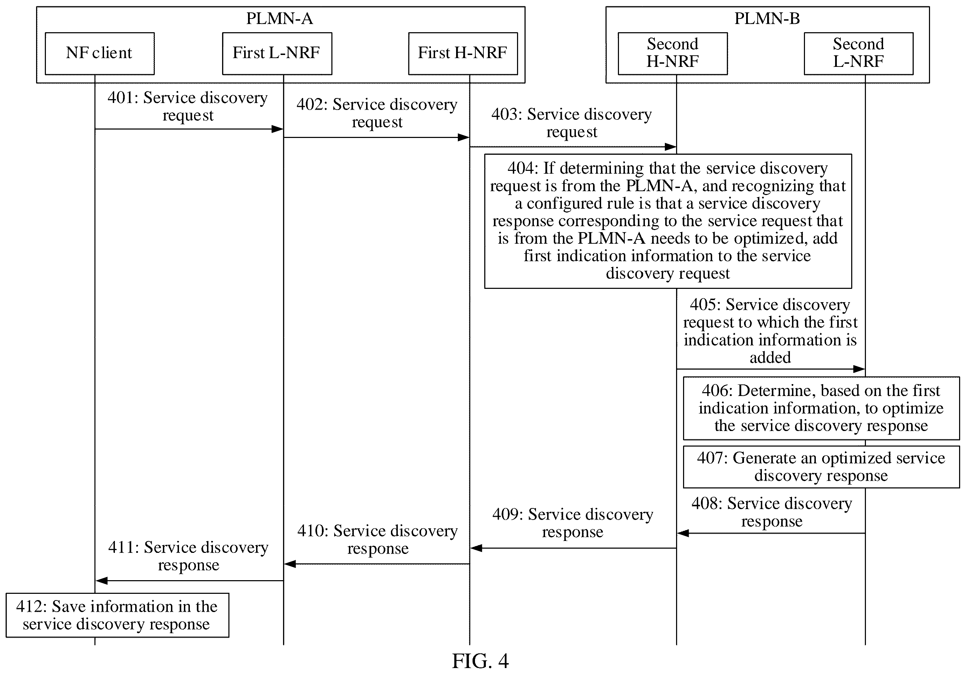

Based on the foregoing descriptions, the following describes in detail, by using specific examples shown in FIG. 3 to FIG. 6, the communication method provided in the embodiment shown in FIG. 4. In the following examples, an example is used for description, in which the network function client is an NF client, and a network function repository network element is an NRF, for example, the first network function repository network element is a second L-NRF. In the following examples, a scenario is used for description, in which the NF client, a first L-NRF, and a first H-NRF belong to a PLMN-A, a second H-NRF and the second L-NRF belong to a PLMN-B, and the PLMN-A and the PLMN-B are different.

FIG. 3 shows an example of a communication method. A specific procedure of this example may include the following steps.

Step 301: An NF client sends a service discovery request to a first L-NRF.

The service discovery request carries search criteria such as "target-nf-type", "service-names", "target-plmn-list", and "supi". A value of "target-plmn-list" is "PLMN-B".

Step 302: The first L-NRF forwards the service discovery request to a first H-NRF.

Step 303: The first H-NRF forwards the service discovery request to a second H-NRF.

Step 304: The second H-NRF forwards the service discovery request to a second L-NRF.

Step 305: If determining that the service discovery request is from a PLMN-A, and recognizing that a configured rule is that a service discovery response corresponding to the service discovery request that is from the PLMN-A needs to be optimized, the second L-NRF determines to optimize the service discovery response.

For details, refer to the descriptions of the manner a1 in the embodiment shown in FIG. 2.

Step 306: The second L-NRF generates an optimized service discovery response.

Specifically, the second L-NRF finds, based on the search criteria through matching, NF profiles that meet the criteria. In the service discovery response, "supiRanges" nested in the NF profiles includes only a value that matches an supi carried in the search criteria, and an information element "plmnlist" includes only a value that matches a PLMN ID in "target-plmn-list" carried in the search criteria.

In addition, optionally, the second NRF may add a flag "simplifyRsp" with a value of "true", that is, the second indication information in the foregoing embodiment, to "SearchResult" in the service discovery response.

Step 307: The second L-NRF sends the optimized service discovery response to the second H-NRF.

Step 308: The second H-NRF forwards the service discovery response to the first H-NRF.

Step 309: The first H-NRF forwards the service discovery response to the first L-NRF.

Step 310: The first L-NRF forwards the service discovery response to the NF client.

Step 311: The NF client saves information in the service discovery response.

Optionally, after receiving the service discovery response, the NF client determines that the value of "simplifyRsp" in "SearchResult" is "true", and may perform the following processing when saving a result in the service discovery response into a buffer: When the NF client saves "supiRanges" of an NF instance in the NF profiles, if another supiRange value of the NF instance already exists in the buffer, the NF client only needs to save a new value in "supiRanges" in the response message, with no need to delete the another "supiRanges" value that already exists in the buffer. A principle for processing another information element is also the same. The buffering process may be referred to as performing incremental buffering.

FIG. 4 shows an example of another communication method. This example differs from the example shown in FIG. 3 in the following: A second H-NRF determines that a service discovery response to a service discovery request that is from a PLMN-A needs to be optimized, and adds first indication information to the service discovery request, so that a second L-NRF determines, based on the first indication information, to optimize the service discovery response. For example, a specific procedure of this example may include the following steps.

Step 401 to step 403 are similar to step 301 to step 303, and reference may be made to each other. Details are not described herein again.

Step 404: If determining that the service discovery request is from a PLMN-A, and recognizing that a configured rule is that a service discovery response corresponding to the service discovery request that is from the PLMN-A needs to be optimized, the second H-NRF adds first indication information to the service discovery request. The first indication information indicates that the service discovery response needs to be optimized.

For details, refer to the descriptions of the case b1 in the manner a2 in the embodiment shown in FIG. 2.

For a specific example of the first indication information, refer to related descriptions in the embodiment shown in FIG. 2. Details are not described herein again.

Step 405: The second H-NRF sends, to a second L-NRF, the service discovery request to which the first indication information is added.

Step 406: The second L-NRF determines, based on the first indication information, to optimize the service discovery response.

Step 407 to step 412 are similar to step 306 to step 311, and reference may be made to each other. Details are not described herein again.

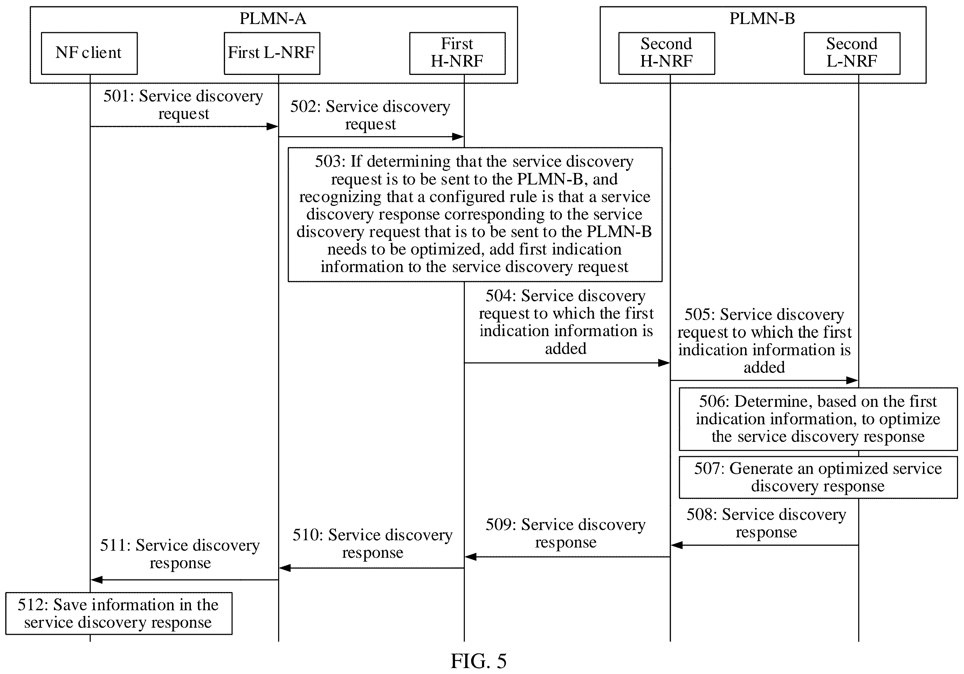

FIG. 5 shows an example of another communication method. This example differs from the example shown in FIG. 4 in the following: An NRF in a PLMN-A determines that a service discovery request to be sent to a PLMN-B needs to be specially identified, and requires that a service discovery response from the PLMN-B is optimized. In this example, a first H-NRF adds first indication information to a service discovery request, so that a second L-NRF determines, based on the first indication information, to optimize a service discovery response. For example, a specific procedure of this example may include the following steps.

Step 501 and step 502 are similar to step 301 and step 302, and reference may be made to each other. Details are not described herein again.

Step 503: If determining that the service discovery request is to be sent to a PLMN-B, and recognizing that a configured rule is that a service discovery response corresponding to the service discovery request that is to be sent to the PLMN-B needs to be optimized, the first H-NRF adds first indication information to the service discovery request. The first indication information indicates that the service discovery response needs to be optimized.

For details, refer to the descriptions of the case b2 in the manner a2 in the embodiment shown in FIG. 2.

For a specific example of the first indication information, refer to related descriptions in the embodiment shown in FIG. 2. Details are not described herein again.

Step 504: The first H-NRF sends, to a second H-NRF, the service discovery request to which the first indication information is added.

Step 505 to step 512 are similar to step 405 to step 412, and reference may be made to each other. Details are not described herein again.

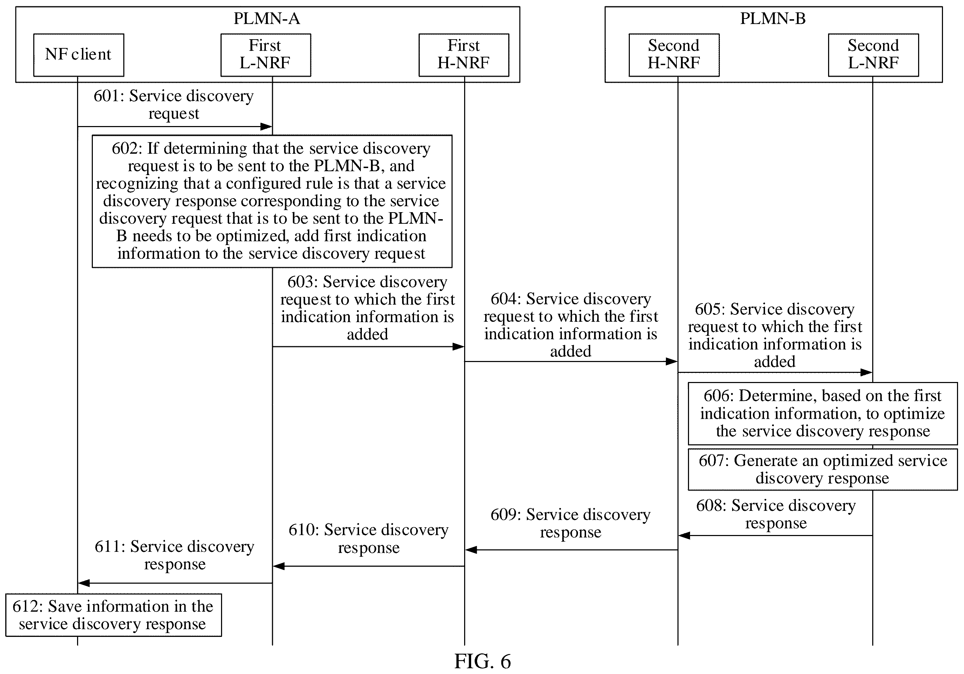

FIG. 6 shows an example of another communication method. This example differs from the example shown in FIG. 4 in the following: An NRF in a PLMN-A determines that a service discovery request to be sent to a PLMN-B needs to be specially identified, and requires that a service discovery response from the PLMN-B is optimized. This example differs from the example shown in FIG. 5 in the following: In this example, a first L-NRF adds first indication information to a service discovery request, so that a second L-NRF determines, based on the first indication information, to optimize a service discovery response. For example, a specific procedure of this example may include the following steps.

Step 601 is similar to step 301, and reference may be made to each other. Details are not described herein again.

Step 602: If determining that the service discovery request is to be sent to a PLMN-B, and recognizing that a configured rule is that a service discovery response corresponding to the service discovery request that is to be sent to the PLMN-B needs to be optimized, the first L-NRF adds first indication information to the service discovery request. The first indication information indicates that the service discovery response needs to be optimized.

For details, refer to the descriptions of the case b2 in the manner a2 in the embodiment shown in FIG. 2.

For a specific example of the first indication information, refer to related descriptions in the embodiment shown in FIG. 2. Details are not described herein again.

Step 603: The first L-NRF sends, to a first H-NRF, the service discovery request to which the first indication information is added.

Step 604 to step 612 are similar to step 504 to step 512, and reference may be made to each other. Details are not described herein again.

In an embodiment, in any one of the examples shown in FIG. 3 to FIG. 6, the second L-NRF may also set a value of a validity period field (validityPeriod) in the service discovery response to a first value when generating the service discovery response, with the first value less than a value of a validity period field (validityPeriod) in a service discovery response received by an NF client in the PLMN-B. In this way, in an inter-PLMN scenario, buffered records in a network function client that does not subscribe to corresponding instance information can be refreshed quickly.

It should be noted that the solution in which the value of the validity period field (validityPeriod) in the service discovery response is set to the first value, and the first value is less than a value of a validity period field (validityPeriod) in a service discovery response received by an NF client in the PLMN-B may be alternatively decoupled from the optimized service discovery response in the foregoing embodiments. In other words, for service discovery responses that are not optimized, their validity period fields (validityPeriod) may also be set to different values. This is not limited in this application.

It should be noted that in the descriptions of the foregoing embodiments in this application, only an example is used for description, in which the NF client is directly connected to the first L-NRF; the NF client, the first L-NRF, and the first H-NRF belong to the PLMN-A; and the second H-NRF and the second L-NRF belong to the PLMN-B. The example is not intended as a limitation on this application. Names and a quantity of the NRFs, and connections between the devices are not limited in this application. For example, the L-NRFs and the H-NRFs may alternatively have other names. For another example, the first H-NRF may not exist, or there may be more NRFs. Examples are not listed one by one in this application.

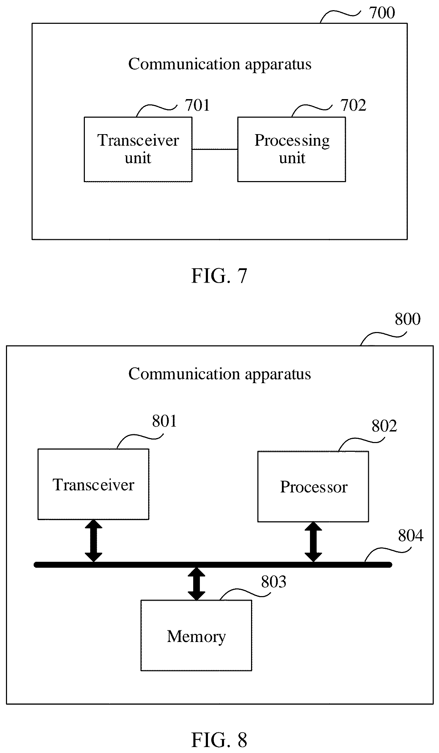

Based on the foregoing embodiments, an embodiment of this application further provides a communication apparatus. As shown in FIG. 7, the communication apparatus 700 may include a transceiver unit 701 and a processing unit 702. The transceiver unit 701 may be configured to receive and send information and the like. The processing unit 702 may control and manage actions of the communication apparatus 700. The processing unit 702 may further control operations performed by the transceiver unit 701.

For example, the communication apparatus 700 may be the first network function repository network element in the foregoing embodiments, or may be a processor, chip, chip system, functional module, or the like in the first network function repository network element. Alternatively, the communication apparatus 700 may be the network function client in the foregoing embodiments, or may be a processor, chip, chip system, functional module, or the like in the network function client.

In an embodiment, when the communication apparatus 700 is configured to implement functions of the first network function repository network element in the foregoing embodiments, the following may be included: The transceiver unit 701 may be configured to receive a service discovery request that is from a network function client, where the service discovery request is used to request network function service instance information; the processing unit 702 may be configured to determine that the service discovery request meets a first condition, and determine to optimize a service discovery response; and the transceiver unit 701 may be further configured to send an optimized service discovery response to the network function client.

In a possible example, the first network function repository network element and the network function client belong to different public land mobile networks.

In an optional implementation, the first condition includes: The service discovery request is from a first public land mobile network, and the service discovery response corresponding to the service discovery request that is from the first public land mobile network needs to be optimized, where the first network function repository network element belongs to a second public land mobile network, and the second public land mobile network is different from the first public land mobile network.

In another optional implementation, the first condition includes: The service discovery request includes first indication information, where the first indication information indicates that the service discovery response needs to be optimized.

Optionally, when receiving the service discovery request that is from the network function client, the transceiver unit 701 is specifically configured to: receive, from a second network function repository network element, the service discovery request that is from the network function client, where the first indication information is added to the service discovery request by the second network function repository network element, and the first network function repository network element and the second network function repository network element belong to a same public land mobile network, or the first network function repository network element and the second network function repository network element belong to different public land mobile networks.

For example, the service discovery response includes second indication information, where the second indication information indicates that the service discovery response is optimized.

In another embodiment, when the communication apparatus 700 is configured to implement functions of the network function client in the foregoing embodiments, the following may be included: The transceiver unit 701 is configured to: send a service discovery request, where the service discovery request is used to request network function service instance information, and receive an optimized service discovery response that is from a first network function repository network element; and the processing unit 702 is configured to control the transceiver unit 701 to perform the sending and receiving operations, where the first network function repository network element and the network function client belong to different public land mobile networks.

Optionally, the service discovery response includes second indication information, where the second indication information indicates that the service discovery response is optimized.

For example, the processing unit 702 may be further configured to determine, based on the second indication information, that the service discovery response is optimized.

It should be noted that in this embodiment of this application, division into the units is an example, and is merely logical function division. During actual implementation, another division manner may be used. The functional units in this embodiment of this application may be integrated in one processing unit, each of the units may exist alone physically, or two or more units may be integrated in one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

Based on the foregoing embodiments, an embodiment of this application further provides a communication apparatus. As shown in FIG. 8, the communication apparatus 800 may include a transceiver 801 and a processor 802. Optionally, the communication apparatus 800 may further include a memory 803. The memory 803 may be disposed inside the communication apparatus 800, or may be disposed outside the communication apparatus 800. The processor 802 may control the transceiver 801 to receive and send messages and the like.

Specifically, the processor 802 may be a central processing unit (central processing unit, CPU), a network processor (network processor, NP), or a combination of a CPU and an NP. The processor 802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 801, the processor 802, and the memory 803 are connected to each other. Optionally, the transceiver 801, the processor 802, and the memory 803 are connected to each other by a bus 804. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representation in FIG. 8, but this does not mean that there is only one bus or only one type of bus.

In an optional implementation, the memory 803 is configured to store a program and the like. Specifically, the program may include program code, and the program code includes computer operation instructions. The memory 803 may include a RAM, or may further include a non-volatile memory (non-volatile memory), for example, one or more magnetic disk memories. The processor 802 executes the application program stored in the memory 803, to implement the foregoing functions. In this way, functions of the communication apparatus 800 are implemented.

For example, the communication apparatus 800 may be the first network function repository network element in the foregoing embodiments, or may be the network function client in the foregoing embodiments.

In an embodiment, when the communication apparatus 800 implements functions of the first network function repository network element in the foregoing method embodiments, the transceiver 801 may implement the receiving and sending operations performed by the first network function repository network element in the foregoing method embodiments, and the processor 802 may implement operations, other than the receiving and sending operations, performed by the first network function repository network element in the foregoing method embodiments. For specific related descriptions, refer to related descriptions in the foregoing embodiments. Details are not described herein again.

In another embodiment, when the communication apparatus 800 implements functions of the network function client in the foregoing method embodiments, the transceiver 801 may implement the receiving and sending operations performed by the network function client in the foregoing method embodiments, and the processor 802 may implement operations, other than the receiving and sending operations, performed by the network function client in the foregoing method embodiments. For specific related descriptions, refer to related descriptions in the foregoing embodiments. Details are not described herein again.

Based on the foregoing embodiments, an embodiment of this application provides a system. The system may include the first network function repository network element, the second network function repository network element, the network function client, and the like in the foregoing embodiments.

An embodiment of this application further provides a computer-readable storage medium. The computer-readable storage medium is configured to store a computer program. When the computer program is executed by a computer, the computer may implement the communication methods provided in the foregoing method embodiments.

An embodiment of this application further provides a computer program product. The computer program product is configured to store a computer program. When the computer program is executed by a computer, the computer may implement the communication methods provided in the foregoing method embodiments.

An embodiment of this application further provides a chip, including a processor. The processor is coupled to a memory, and is configured to invoke a program in the memory, so that the chip implements the communication methods provided in the foregoing method embodiments.

An embodiment of this application further provides a chip. The chip is coupled to a memory, and is configured to implement the communication methods provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media that include computer-usable program code (including but not limited to a disk memory, a CD-ROM, and an optical memory).

This application is described with reference to the flowcharts and/or block diagrams of the method, device (system), and computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a function specified in one or more procedures in the flowcharts and/or in one or more blocks in the block diagrams.

These computer program instructions may be alternatively stored in a computer-readable memory that can instruct a computer or another programmable data processing device to work in a specific manner, so that the instructions stored in the computer-readable memory generate an artifact that includes an instruction apparatus. The instruction apparatus implements a function specified in one or more procedures in the flowcharts and/or in one or more blocks in the block diagrams.

These computer program instructions may be alternatively loaded onto a computer or another programmable data processing device, so that a series of operations and steps are performed on the computer or another programmable device, to generate computer-implemented processing. Therefore, the instructions executed on the computer or another programmable device provide steps for implementing a function specified in one or more procedures in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope defined by the claims of this application and their equivalent technologies.

## Claims

1. A communication method, comprising:
receiving, by a first network function repository network element, a service discovery request that is from a network function client, wherein the service discovery request is used to request network function service instance information;
determining, by the first network function repository network element, that the service discovery request meets a first condition, and determining to optimize a service discovery response; and
sending, by the first network function repository network element, an optimized service discovery response to the network function client.

2. The method according to claim 1, wherein the first network function repository network element and the network function client belong to different public land mobile networks.

3. The method according to claim 1 or 2, wherein the first condition comprises:
the service discovery request is from a first public land mobile network, and the service discovery response corresponding to the service discovery request that is from the first public land mobile network needs to be optimized, wherein
the first network function repository network element belongs to a second public land mobile network, and the second public land mobile network is different from the first public land mobile network.

4. The method according to claim 1 or 2, wherein the first condition comprises:
the service discovery request comprises first indication information, wherein the first indication information indicates that the service discovery response needs to be optimized.

5. The method according to claim 4, wherein receiving, by the first network function repository network element, the service discovery request that is from the network function client comprises:
receiving, by the first network function repository network element from a second network function repository network element, the service discovery request that is from the network function client, wherein the first indication information is added to the service discovery request by the second network function repository network element; and
the first network function repository network element and the second network function repository network element belong to a same public land mobile network, or the first network function repository network element and the second network function repository network element belong to different public land mobile networks.

6. The method according to any one of claims 1 to 5, wherein the service discovery response comprises second indication information, wherein the second indication information indicates that the service discovery response is optimized.

7. A communication method, comprising:
sending, by a network function client, a service discovery request, wherein the service discovery request is used to request network function service instance information; and
receiving, by the network function client, an optimized service discovery response that is from a first network function repository network element, wherein
the first network function repository network element and the network function client belong to different public land mobile networks.

8. The method according to claim 7, wherein the service discovery response comprises second indication information, wherein the second indication information indicates that the service discovery response is optimized.

9. The method according to claim 8, wherein the method further comprises:
determining, by the network function client based on the second indication information, that the service discovery response is optimized.

10. A communication system, comprising:
a second network function repository network element receives a service discovery request that is from a network function client, wherein the service discovery request is used to request network function service instance information;
the second network function repository network element sends the service discovery request to a first network function repository network element;
the first network function repository network element determines that the service discovery request meets a first condition, and determines to optimize a service discovery response; and
the first network function repository network element sends an optimized service discovery response to the network function client.

11. The system according to claim 10, wherein the first network function repository network element and the network function client belong to different public land mobile networks.

12. The system according to claim 10 or 11, wherein the first condition comprises:
the service discovery request is from a first public land mobile network, and the service discovery response corresponding to the service discovery request that is from the first public land mobile network needs to be optimized, wherein
the first network function repository network element belongs to a second public land mobile network, and the second public land mobile network is different from the first public land mobile network.

13. The system according to claim 10 or 11, wherein the first condition comprises:
the service discovery request comprises first indication information, wherein the first indication information indicates that the service discovery response needs to be optimized.

14. The system according to claim 13, wherein after the second network function repository network element receives the service discovery request that is from the network function client, the method further comprises:
the second network function repository network element adds the first indication information to the service discovery request, wherein
the first network function repository network element and the second network function repository network element belong to a same public land mobile network, or the first network function repository network element and the second network function repository network element belong to different public land mobile networks.

15. The system according to any one of claims 10 to 14, wherein the service discovery response comprises second indication information, wherein the second indication information indicates that the service discovery response is optimized.

16. A communication apparatus, comprising a module or unit that is configured to perform the method according to any one of claims 1 to 6.

17. A communication apparatus, comprising a module or unit that is configured to perform the method according to any one of claims 7 to 9.

18. A communication apparatus, comprising a processor and a transceiver, wherein
the transceiver is configured to receive and send information; and
the processor, coupled to a memory, is configured to invoke computer instructions in the memory, to perform the method according to any one of claims 1 to 6 by using the transceiver.

19. A communication apparatus, comprising a processor and a transceiver, wherein
the transceiver is configured to receive and send information; and
the processor, coupled to a memory, is configured to invoke computer instructions in the memory, to perform the method according to any one of claims 7 to 9 by using the transceiver.

20. A computer-readable storage medium, wherein the computer-readable storage medium stores computer-executable instructions, and when the computer-executable instructions are invoked by a computer, the method according to any one of claims 1 to 6 or the method according to any one of claims 7 to 9 is performed.

21. A computer program product, comprising instructions, wherein when the instructions are run on a computer, the method according to any one of claims 1 to 6 or the method according to any one of claims 7 to 9 is performed.

22. A chip, wherein the chip is coupled to a memory, and is configured to read and execute program instructions stored in the memory, to implement the method according to any one of claims 1 to 6 or the method according to any one of claims 7 to 9.
